# FASCICULE DE BREVET EUROPEEN

(11) **EP 0 949 115 B1**
(45) Date de publication et mention de la délivrance du brevet: **27.08.2003**
(21) Numéro de dépôt: 99400811.8
(22) Date de dépôt: 02.04.1999
(51) Int. Cl.: B60N 2/36, B60N 2/42

(54) **Assise de siège arrière de véhicule automobile avec dispositif d'anti-soumarinage**
Kraftfahrzeugrücksitz mit Vorrichtung zur Verhinderung des Abtauchens
Motor vehicle rear seat with anti-submarining device

(30) Priorité: 08.04.1998 FR 9804355
(43) Date de publication de la demande: 13.10.1999
(73) Titulaire: AUTOMOBILES PEUGEOT, 75116 Paris (FR); AUTOMOBILES CITROEN, 92200 Neuilly-sur-Seine (FR)
(72) Inventeur: Lesieur, Stéphane, 77390 Ozouer le Voulgis (FR)
(74) Mandataire: Gendraud, Pierre

(56) Documents cités:
- EP-A- 0 403 072
- EP-A- 0 459 839
- DE-A- 3 913 529
- FR-A- 2 641 244
- FR-A- 2 738 535
- FR-A- 2 747 081
- GB-A- 2 117 633
- GB-A- 2 169 505
- US-A- 5 340 185

## Description

La présente invention concerne une assise de siège arrière de véhicule automobile avec dispositif d'anti-soumarinage (cf. par exemple EP-A-0 403 072).

Elle se rapporte plus particulièrement à une assise de siège arrière pourvue d'un dispositif appelé barre anti-soumarinage destinée à retenir l'occupant sous cuisse afin de limiter les déplacements exagérés vers l'avant, du bassin de l'occupant du siège lors d'un choc du véhicule, où il est connu que dans une telle situation le corps de celui-ci sanglé sur son siège, se déplace relativement à la ceinture, en particulier par glissement de son bassin le long de l'assise, sous la partie ventrale de la ceinture. Une telle barre a donc pour effet de préserver l'occupant des lésions abdominales.

C'est ainsi par exemple que l'on connaît des assises de sièges arrière qui sont constituée d'un réseau de fil en acier formant un panier qui a la forme complémentaire d'une cuvette réalisée dans le plancher du véhicule avec laquelle il coopère en position d'utilisation pour un occupant de l'assise. Une telle forme assure parfaitement la retenue de l'occupant sous cuisse et évite à ce dernier de sous-mariner en cas de choc violent. Cependant, lorsque l'utilisateur du véhicule désire basculer vers l'avant l'assise jusqu'au contact avec le dossier du siège avant puis basculer le dossier arrière sur le plancher afin par exemple de transporter des objets encombrants, il s'avère que le dossier vient en contact avec le haut de la cuvette ne permettant pas d'obtenir un plancher de chargement parfaitement horizontal.

Le but de la présente invention est de résoudre l'inconvénient susmentionné en proposant une assise de siège arrière qui permet lors du basculement du dossier arrière d'obtenir un plancher plat, et qui conserve également un dispositif d'anti-soumarinage.

A cet effet, la présente invention a pour objet une assise de siège arrière de véhicule automobile montée pivotante au moyen de deux articulations solidaires du plancher, chacune des articulations étant constituée d'un moyen de pivotement de l'assise permettant le basculement de cette dernière jusqu'au contact avec un dossier de siège avant (ce qui est généralement connu dans l'art), caractérisée en ce qu'un moyen anti-soumarinage permettant la retenue sous cuisse de l'occupant en position d'utilisation de l'assise est relié à chacune des articulations, de maniére à ce que ledit moyen anti-soumarinage est escamotable lors du basculement de l'assise.

Selon d'autres caractéristiques de l'invention :
- le moyen de pivotement comporte une bielle qui est montée à l'une de ses extrémités en rotation libre sur un baquet constituant l'armature rigide de l'assise par l'intermédiaire d'un axe transversal constitué par le pliage de l'une des extrémités de la bielle et sur l'autre extrémité en rotation libre autour d'une chape formant une articulation, qui est apte a pivoter autour d'un axe horizontal transversal par rapport à l'axe longitudinal du véhicule et qui relie ladite chape au plancher,
- le moyen anti-soumarinage est constitué d'une barre horizontale dont les extrémités sont pliées de manière à ce que ces dernières soient parallèles à la barre,
- chacune des extrémités de la barre est reliée respectivement de manière fixe à chacune des chapes de l'articulation correspondante et montée libre en rotation par rapport au plancher,
- l'axe transversal est réalisé par l'extrémité de la barre qui est engagée dans deux orifices réalisés respectivement dans deux flasques solidaires du plancher formant une chape,
- la barre anti-soumarinage est immobilisée sur la chape de telle manière qu'un axe fictif P passant par le centre des articulations respectivement forme un angle β fixe par rapport à un axe fictif L passant par le centre respectivement de l'articulation et de la barre horizontale,
- la barre anti-soumarinage est apte à se loger dans un logement prévu sur le baquet de manière à assurer la retenue sous cuisse de l'occupant en cas de choc,
- au moins une des articulations est pourvue d'un moyen de guidage du basculement de l'assise de manière à faciliter cette manoeuvre par l'utilisateur,
- le moyen de guidage comporte au moins une rampe de guidage qui est constituée par une découpe sensiblement verticale réalisée dans l'un des flasques solidaires du plancher dans laquelle s'engage l'extrémité de la bielle,
- ce moyen de guidage qui est constitué d'une biellette qui prolonge sensiblement verticalement la biellette et qui est fixe sur la chape par l'intermédiaire de l'une de ses extrémités au niveau de l'articulation et dont l'autre extrémité qui est pliée de manière à former un axe transversal par rapport à l'axe longitudinal du véhicule coopère avec une rampe de guidage réalisée sur l'un des flasques solidaires du plancher.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue schématique de côté d'un siège arrière de véhicule automobile, conforme à l'invention, respectivement en position d'utilisation et en position de basculement de l'assise,
- la figure 2 est une vue en perspective de l'articulation d'une rangée d'assise arrière de véhicule automobile constituée de deux parties dont l'une est en position de basculement et l'autre en position d'utilisation,
- la figure 3 est une vue à plus grande échelle en position utilisation de l'articulation selon l'invention,
- la figure 4 est une vue de côté, à plus grande échelle, illustrant le fonctionnement de l'articulation selon l'invention,
- la figure 5 est une vue similaire à la figure 4 d'un second mode de réalisation de l'invention,
- la figure 6 est une vue en perspective, à plus grande échelle d'une seconde variante de réalisation de l'articulation selon le second mode de réalisation de l'invention, et
- la figure 7 est une vue en perspective des articulations, conforme à la figure 6, d'une rangée d'assise arrière de véhicule automobile constituée de deux parties dont l'une est en position de basculement et l'autre en position d'utilisation.

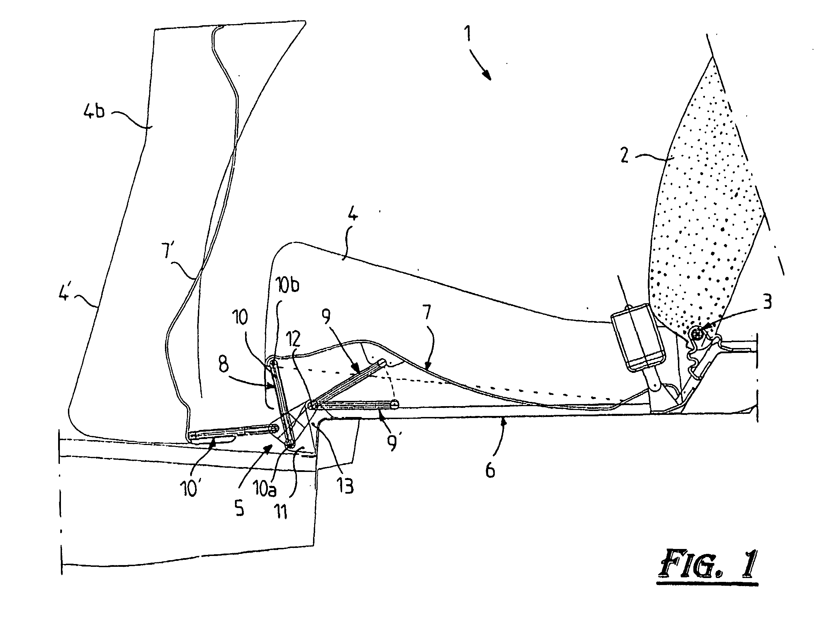

On a représenté à la figure 1, un siège arrière 1 de véhicule automobile du type comportant un dossier 2 articulé autour d'un axe 3 solidaire du plancher 6 et une assise 4 montée pivotante au moyen de deux articulations 5 solidaires du plancher 6 et disposés par exemple de manière symétrique par rapport à un axe médian longitudinal de l'assise 4.

L'assise 4 est constituée d'un baquet 7 constituant l'armature rigide de l'assise 4 destiné à être recouvert de manière connue en soi de nappes de ressort et à être garnis de mousse et de tissu, qui repose en position d'utilisation 4a sur le plancher 6 horizontal et plat du véhicule.

Ce baquet 7 est articulé dans sa partie amont, en considérant la figure 1, sur le plancher 6 au moyen de deux articulations 5 disposées à chacun des bords amonts de l'assise 4. Chacune des articulations 5 est constituée d'un moyen de pivotement 8 du baquet 7 de manière à permettre le basculement dudit baquet jusqu'au contact avec le dossier du siège avant, non représenté.

Selon la présente invention, un moyen anti-soumarinage 9 permettant une retenue sous cuisse de l'occupant en position d'utilisation est relié à chacune des articulations 5 de manière à ce que ce moyen anti-soumarinage 9 soit escamotable en position de basculement 4b de l'assise 4.

Le moyen de pivotement 8 comporte une bielle par exemple cylindrique 10 qui est montée à l'une de ses extrémités en rotation libre sur le baquet 7 par l'intermédiaire d'un axe transversal 10b constitué par le pliage de l'une des extrémités de la bielle 10 et sur l'autre extrémité en rotation libre autour d'une chape 11 formant une articulation 10a, qui est apte a pivoter autour d'un axe horizontal transversal 12 par rapport à l'axe longitudinal du véhicule et qui relie ladite chape 11 au plancher 6.

Le moyen anti-soumarinage 9 est constitué d'une barre horizontale dont les extrémités 9a , 9b sont pliées de manière à ce que ces dernières soient parallèles à la barre 9.

Dans notre mode de réalisation, les extrémités sont pliées de manière à ce que les faces latérales respectivement de chaque extrémité 9a, 9b soient en regard l'une de l'autre, comme visible sur les figures.

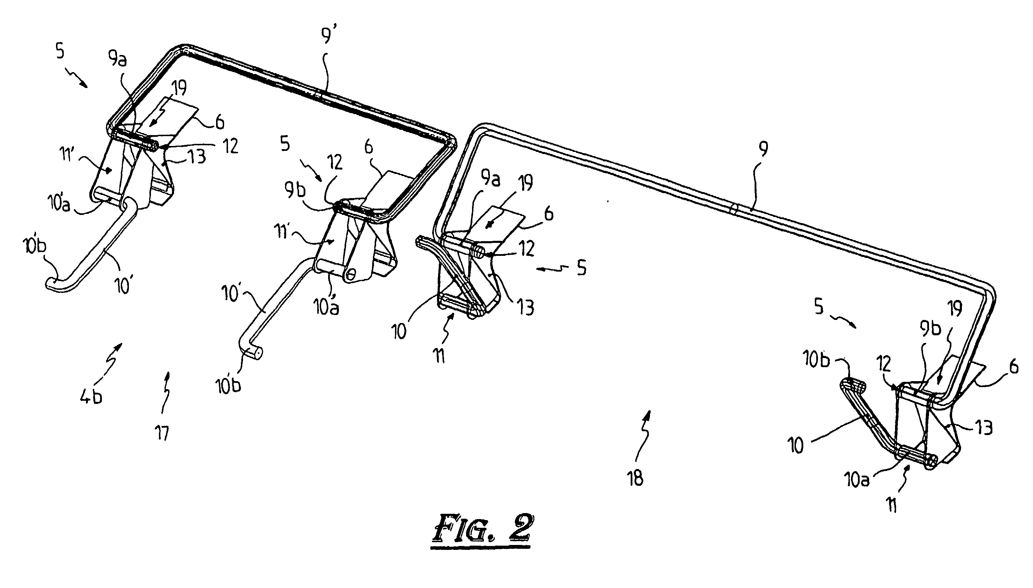

Chacune des extrémités 9a, 9b de la barre 9 est reliée respectivement de manière fixe à chacune des chapes 11 de l'articulation 5 correspondante, comme visibles sur les figures, et montée libre en rotation par rapport au plancher 6. L'axe transversal 12 est réalisé par l'extrémité de la barre 9a ou 9b qui est engagée dans deux orifices réalisés respectivement dans deux flasques 13 solidaires du plancher 6 formant chape 19, comme visible à la figure 2.

La barre anti-soumarinage 9 est immobilisée sur la chape 11 de telle manière qu'un axe fictif P passant par le centre des articulations respectivement 12 et 10a forme un angle β fixe par rapport à un axe fictif L passant par le centre respectivement de l'articulation 12 et de la barre horizontale 9.

La barre 9 est apte à se loger dans un logement 14 prévu sur le baquet 7 de manière à assurer la retenue sous cuisse de l'occupant en cas de choc.

Ce logement 14 est constitué de deux flasques 15 respectivement disposés de part et d'autre des côtés de l'assise 4 à une certaine distance de l'avant de l'assise, désigné généralement par le terme « nez », qui sont aptes à recevoir une partie du pourtour de la barre 9 ;

De manière à faciliter l'engagement de la barre 9 dans le logement 14, chacun des flasques 15 est pourvu d'une rampe de guidage 16.

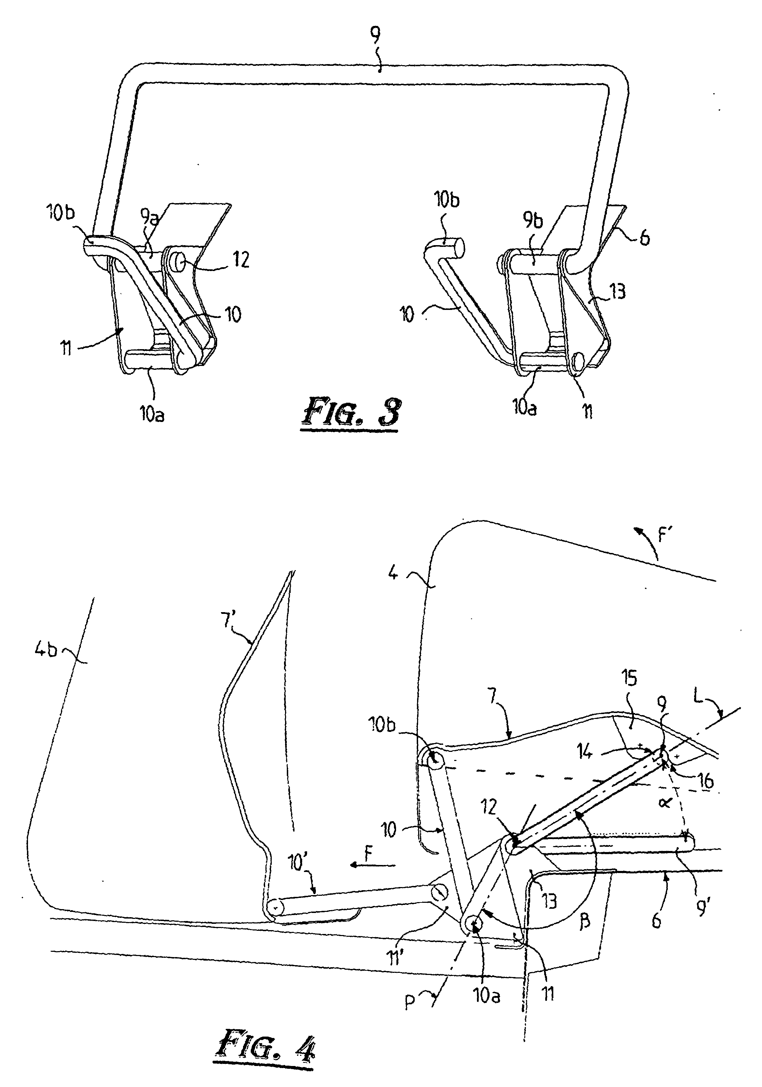

Le basculement de l'assise et le fonctionnement de l'articulation selon l'invention vont maintenant être expliqués en relation avec les figures 1 à 4.

On notera que toutes les pièces représentées en position de basculement 4b de l'assise 4, sur les figures, portent la même référence numérique qu'en position d'utilisation suivie du symbole suivant " '(prime) ".

L'utilisateur du véhicule désirant basculer le siège arrière pour, par exemple, transporter des objets encombrants tire sur le nez du coussin de l'assise 4, suivant la flèche F, ce qui entraîne le pivotement de la chape 11 autour de l'axe 12 suivant un angle α ainsi que le déverrouillage de la barre 9 du baquet 7 suivant le même angle α, par exemple de 30 degrés, comme représenté à la figure 4. La barre anti-soumarinage 9 se positionne alors à l'horizontale parallèlement au plancher 6.

Il suffit ensuite de tirer l'arrière de l'assise 4, suivant la flèche F', ce qui entraîne le pivotement du baquet 7, et par voie de conséquence de l'assise 4, autour de l'articulation 10b dans un premier temps puis autour de l'axe d'articulation 10a formé par l'autre extrémité de la bielle 10 de manière à basculer l'assise jusqu'au contact avec le dossier avant, comme visible sur les figures 1 et 4.

Le dossier 2 peut être basculé vers l'avant jusqu'à son contact avec le plancher 6. Ce dernier étant complètement plat et n'étant pas obstrué par la barre anti-soumarinage 9 qui s'escamote sur le plancher lors du basculement de l'assise 4, le dossier peut être complètement basculé sur le plancher, ce qui permet avantageusement l'obtention d'un plancher de chargement plat.

On a représenté à la figure 2, une configuration d'articulations d'une rangée d'assises de sièges arrière constituée en deux parties distinctes 17 et 18 permettant le basculement d'une desdites parties 17 tout en conservant la possibilité d'avoir une assise pour un occupant. Dans cette configuration bien connue, les articulations pour chaque assise sont conformes à l'invention.

La remise en place du siège est effectuée en procédant tout aussi facilement de manière inverse, la barre anti-soumarinage 9 est verrouillée sur le baquet 7 dans son logement 14 de manière aisée par l'intermédiaire des rampes de guidage 16 des flasques 15.

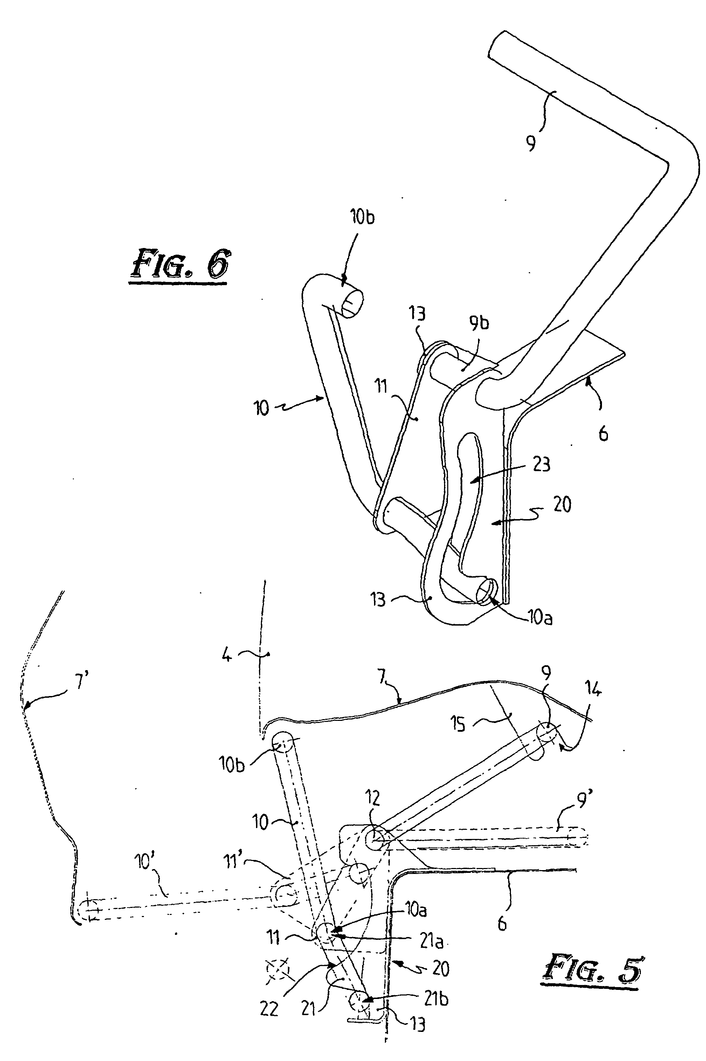

Selon un second mode de réalisation au moins une des articulations 5, représentée aux figures 5 à 7, est pourvue d'un moyen de guidage 20 du basculement de l'assise 4 de manière à faciliter cette manoeuvre par l'utilisateur.

On a représenté à la figure 5, une première variante de réalisation de ce moyen de guidage 20 qui est constitué d'une biellette 21 qui prolonge sensiblement verticalement la biellette 10 et qui est fixe sur la chape 11 par l'intermédiaire de l'une de ses extrémités 21a au niveau par exemple de l'articulation 10a et dont l'autre extrémité 21b qui est pliée de manière à former un axe transversal par rapport à l'axe longitudinal du véhicule coopère avec une rampe de guidage 22 réalisée sur l'un des flasques 13 solidaire du plancher 6.

On comprend en regardant la figure 5, que l'extrémité 21b de la biellette 21 vient guider l'utilisateur dans les déplacements de l'assise, en obligeant ce dernier à tirer sur le nez du coussin de l'assise 4 en premier. Le basculement de l'assise et le fonctionnement de l'articulation s'effectue de manière identique à celle décrit ci-dessus.

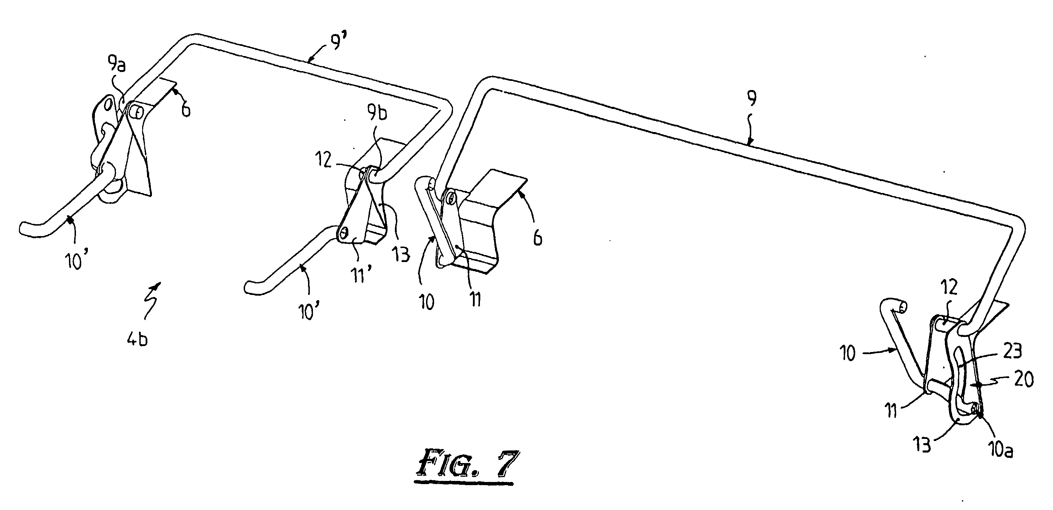

On a représenté aux figures 6 et 7, une seconde variante du moyen de guidage 20 décrit ci-dessus. Dans cette seconde variante, le moyen de guidage 20 comporte au moins une rampe de guidage 23 qui est constituée par une découpe sensiblement verticale réalisée dans l'un des flasques 13 solidaire du plancher 6 dans laquelle s'engage l'extrémité 10a de la bielle 10. Un tel moyen 20 permet de manière simple le guidage de la manoeuvre de basculement de l'assise 4, comme visible sur les figures 6 et 7.

Dans un tel mode de réalisation, la chape 11 est constitué d'un flasque unique vertical comme visible aux figures 6 et 7.

On comprend à la lecture de la description ci-dessus qu'une telle articulation 5 d'assise 4 de siège arrière est de réalisation simple, rapide et permet avantageusement d'avoir un moyen anti-soumarinage 9 escamotable de façon à obtenir un plancher de chargement plat.

## Revendications

1. Assise de siège arrière de véhicule automobile montée pivotante dans sa partie amont au moyen de deux articulations (5) solidaires du plancher (6), chacune des articulations (5) étant constituée d'un moyen de pivotement (8) de l'assise (4) permettant le basculement de cette dernière jusqu'au contact avec un dossier de siège avant, **caractérisée en ce qu'**un moyen anti-soumarinage (9) permettant la retenue sous cuisse de l'occupant en position d'utilisation de l'assise (4) est relié à chacune des articulations (5) de manière à ce que ledit moyen anti-soumarinage (9) est escamotable lors du basculement (4b) de l'assise (4).

2. Assise selon la revendication 1, **caractérisée en ce que** le moyen de pivotement (8) comporte une bielle (10) qui est montée à l'une de ses extrémités en rotation libre sur un baquet (7) constituant l'armature rigide de l'assise (4) par l'intermédiaire d'un axe transversal (10b) constitué par le pliage de l'une des extrémités de la bielle (10) et sur l'autre extrémité en rotation libre autour d'une chape (11) formant une articulation (10a), qui est apte a pivoter autour d'un axe horizontal transversal (12) par rapport à l'axe longitudinal du véhicule et qui relie ladite chape (11) au plancher (6).

3. Assise selon la revendication 1 ou 2, **caractérisée en ce que** le moyen anti-soumarinage (9) est constitué d'une barre horizontale dont les extrémités (9a , 9b) sont pliées de manière à ce que ces dernières soient parallèles à la barre (9).

4. Assise selon la revendication 3, **caractérisée en ce que** chacune des extrémités (9a, 9b) de la barre (9) est reliée respectivement de manière fixe à chacune des chapes (11) de l'articulation (5) correspondante et montée libre en rotation par rapport au plancher (6).

5. Assise selon l'une quelconque des revendications 2 à 4, **caractérisée en ce que** l'axe transversal (12) est réalisé par l'extrémité de la barre (9a ou 9b) qui est engagée dans deux orifices réalisés respectivement dans deux flasques (13) solidaires du plancher (6) formant une chape (19).

6. Assise selon la revendication 5, **caractérisée en ce que** la barre anti-soumarinage (9) est immobilisée sur la chape (11) de telle manière qu'un axe fictif (P) passant par le centre des articulations respectivement (12 et 10a) forme un angle β fixe par rapport à un axe fictif (L) passant par le centre respectivement de l'articulation (12) et de la barre horizontale (9).

7. Assise selon l'une quelconque des revendications 2 à 6, **caractérisée en ce que** la barre anti-soumarinage (9) est apte à se loger dans un logement (14) prévu sur le baquet (7) de manière à assurer la retenue sous cuisse de l'occupant en cas de choc.

8. Assise selon l'une quelconque des revendications précédentes, **caractérisée en ce que** au moins une des articulations (5) est pourvue d'un moyen de guidage (20) du basculement de l'assise (4) de manière à faciliter cette manoeuvre par l'utilisateur.

9. Assise selon la revendication 8, **caractérisée en ce que** le moyen de guidage (20) comporte au moins une rampe de guidage (23) qui est constituée par une découpe sensiblement verticale réalisée dans l'un des flasques (13) solidaires du plancher (6) dans laquelle s'engage l'extrémité (10a) de la bielle (10).

10. Assise selon la revendication 8, **caractérisée en ce que** ce moyen de guidage (20) qui est constitué d'une biellette (21) qui prolonge sensiblement verticalement la biellette (10) et qui est fixe sur la chape (11) par l'intermédiaire de l'une de ses extrémités (21a) au niveau de l'articulation (10a) et dont l'autre extrémité (21b) qui est pliée de manière à former un axe transversal par rapport à l'axe longitudinal du véhicule coopère avec une rampe de guidage (22) réalisée sur l'un des flasques (13) solidaires du plancher (6).

## Patentansprüche

1. Rücksitzfläche für ein Kraftfahrzeug, die in ihrem stromaufwärtigen Abschnitt mit Hilfe von zwei mit dem Boden (6) fest verbundenen Gelenken (5) verschwenkbar montiert ist, wobei jedes der Gelenke (5) von einer Einrichtung (8) zum Verschwenken der Sitzfläche (4) gebildet wird, die das Kippen von dieser bis zum Kontakt mit der Rückenlehne eines Vordersitzes erlaubt, **dadurch gekennzeichnet, dass** eine Einrichtung (9) zum Verhindern des Abtauchens, die den Insassen in der Benutzungsposition der Sitzfläche (4) unter den Oberschenkeln hält, mit einem der Gelenke (5) derart verbunden ist, dass die Einrichtung (9) zum Verhindern des Abtauchens beim Kippen (4b) der Sitzfläche (4) einziehbar ist.

2. Sitzfläche nach Anspruch 1, **dadurch gekennzeichnet, dass** die Einrichtung (8) zum Verschwenken eine Pleuelstange (10) umfasst, die an einem ihrer Enden drehbeweglich über eine durch Biegen eines der Enden der Pleuelstange (10) gebildete Querachse (10b) an einer Wanne (7) montiert ist, die den starren Beschlag der Sitzfläche (4) bildet, und an ihrem anderen Ende an einer Abdeckung (11) drehbeweglich montiert ist, die ein Gelenk (10a) bildet, das um eine horizontale Querachse (12) gegenüber der Längsachse des Fahrzeugs verschwenken kann und die Abdeckung (11) mit dem Boden (6) verbindet.

3. Sitzfläche nach Anspruch 1 oder 2, **dadurch gekennzeichnet, dass** die Einrichtung (9) zum Verhindern des Abtauchens von einer horizontalen Stange gebildet wird, deren Enden (9a, 9b) so gebogen sind, dass sie parallel zur Stange (9) verlaufen.

4. Sitzfläche nach Anspruch 3, **dadurch gekennzeichnet, dass** jedes der Enden (9a, 9b) der Stange (9) jeweils fest mit der Abdeckung (11) des entsprechenden Gelenks (5) verbunden und gegenüber dem Boden (6) drehbeweglich montiert ist.

5. Sitzfläche nach einem der Ansprüche 2 bis 4, **dadurch gekennzeichnet, dass** die Querachse (12) vom Ende (9a oder 9b) der Stange gebildet wird, das in zwei Öffnungen in zwei mit dem Boden (6) fest verbundenen Flanschen (13) eingeführt ist, die eine Abdeckung (19) bilden.

6. Sitzfläche nach Anspruch 5, **dadurch gekennzeichnet, dass** die Stange (9) zum Verhindern des Abtauchens derart an der Abdeckung (11) festgestellt ist, dass eine fiktive Achse (P), die durch das jeweilige Zentrum der Gelenke (12 und 10a) verläuft, einen festen Winkel β mit einer fiktiven Achse (L) einschließt, die durch das Zentrum des Gelenks (12) und der horizontalen Stange (9) verläuft.

7. Sitzfläche nach einem der Ansprüche 2 bis 6, **dadurch gekennzeichnet, dass** die Stange (9) zum Verhindern des Abtauchens in einer Aufnahme (14) in der Wanne (7) derart zu liegen kommen kann, dass sie den Halt des Insassen unter den Oberschenkeln im Fall eines Aufpralls sicherstellt.

8. Sitzfläche nach einem der vorhergehenden Ansprüche, **dadurch gekennzeichnet, dass** mindestens eines der Gelenke (5) mit einer Einrichtung (20) zum Führen des Kippens der Sitzfläche (4) versehen ist, die dem Benutzer diesen Vorgang erleichtert.

9. Sitzfläche nach Anspruch 8, **dadurch gekennzeichnet, dass** die Einrichtung (20) zum Führen mindestens eine Führrampe (23) aufweist, die durch einen im Wesentlichen vertikalen Ausschnitt in einem der mit dem Boden (6) fest verbundenen Flansche (13) gebildet wird, in den sich das Ende (10a) der Pleuelstange (10) einfügt.

10. Sitzfläche nach Anspruch 8, **dadurch gekennzeichnet, dass** die Führeinrichtung (20), die von einem Schwingarm (21) gebildet wird, der die Pleuelstange (10) im Wesentlichen vertikal verlängert und an der Abdeckung (11) an einem seiner Enden (21a) auf der Höhe des Gelenks (10a) befestigt ist und an seinem anderen Ende (21b) so gebogen ist, dass eine Querachse gegenüber der Längsachse des Fahrzeugs gebildet wird, mit einer Führrampe (22) zusammenwirkt, die an einem der mit dem Boden (6) fest verbundenen Flansche (13) ausgebildet ist.

## Claims

1. Rear seat base of a motor vehicle mounted so as to pivot in its upstream part by means of two articulations (5) integral with the floor (6), each of the articulations (5) being constituted by a means (8) for pivoting the seat base (4) allowing the latter to tilt until it contacts a front seat back, **characterised in that** an anti-submarining means (9) allowing the occupant to be held under his thigh when the seat base (4) is in the position of use is connected to each of the articulations (5) so that said anti-submarining means (9) is retractable when the seat base (4) is tilted (4b).

2. Seat base according to Claim 1, **characterised in that** the pivoting means (8) comprises a connecting rod (10) that is mounted at one of its ends in free rotation on a bucket frame (7) constituting the rigid reinforcement of the seat base (4) by the intermediary of a transverse axis (10b) constituted by the bending of the one of the ends of the connecting rod (10) and at the other end in free rotation about a fork joint (11) forming an articulation (10a), which is capable of pivoting about a horizontal axis (12) transverse with respect to the longitudinal axis of the vehicle and which connects said fork joint (11) to the floor (6).

3. Seat base according to Claim 1 or 2, **characterised in that** the anti-submarining means (9) is constituted by a horizontal bar, the ends (9a, 9b) of which are bent so that the latter are parallel to the bar (9).

4. Seat base according to Claim 3, **characterised in that** each of the ends (9a, 9b) of the bar (9) is respectively connected in a fixed way to each of the fork joints (11) of the corresponding articulation (5) and mounted in free rotation with respect to the floor (6).

5. Seat base according to any one of Claims 2 to 4, **characterised in that** the transverse axis (12) is produced by the end of the bar (9a or 9b), which is engaged in two openings made respectively in two side plates (13) integral with the floor (6), forming a fork joint (19).

6. Seat base according to Claim 5, **characterised in that** the anti-submarining bar (9) is fixed immovably to the fork joint (11) in such a way that a fictitious axis (P) passing through the centre of the articulations respectively (12 and 10a) forms a fixed angle β with respect to a fictitious axis (L) passing through the centre of the articulation (12) and the horizontal bar (9) respectively.

7. Seat base according to any one of Claims 2 to 6, **characterised in that** the anti-submarining bar (9) is capable of being housed in a recess (14) provided on the bucket frame (7) so as to ensure that the occupant is held under his thigh in the event of an impact.

8. Seat base according to any one of the preceding claims, **characterised in that** at least one of the articulations (5) is provided with a means (20) for guiding the tilt of the seat base (4) so as to facilitate this operation by the user.

9. Seat base according to Claim 8, **characterised in that** the guiding means (20) comprises at least one guide ramp (23), which is constituted by a substantially vertical cut made in one of the side plates (13) integral with the floor (6) in which the end (10a) of the connecting rod (10) is engaged.

10. Seat base according to Claim 8, **characterised in that** this guiding means (20), which is constituted by a connecting rod (21) that prolongs the connecting rod (10) substantially vertically and is fixed to the fork joint (11) via one of its ends (21a) level with the articulation (10a) and the other end of which (21b), which is bent so as to form an axis transverse with respect to the longitudinal axis of the vehicle, co-operates with a guide ramp (22) produced on one of the side plates (13) integral with the floor (6).
